# NEW EUROPEAN PATENT SPECIFICATION

(11) **EP 4 085 112 B2**
(45) Date of publication and mention of the opposition decision: **26.08.2026**
(45) Mention of the grant of the patent: 06.12.2023
(21) Application number: 20841742.8
(22) Date of filing: 30.12.2020
(51) Int. Cl.: C09D 167/00

(54) **USE OF BRANCHED POLYESTERS IN ADDITIVEAMOUNTS AS FLOW ENHANCERS AND LEVELLING AGENTS**
VERWENDUNG VON VERZWEIGTEN POLYESTERN IN ZUSATZMENGENALS FLIESSVERBESSERER UND GELIERMITTEL
UTILISATION DE POLYESTERS RAMIFIES DANS DES DOSES D'ADDITIF EN TANTQUE FLUIDIFIANTS ET AGENTS DE NIVELLEMENT

(30) Priority: 30.12.2019 EP 19220076
(43) Date of publication of application: 09.11.2022
(73) Proprietor: BASF Coatings GmbH, 48165 Münster (DE)
(72) Inventor: COLYER, Emerson, Keith, Whitehouse, OH 43571 (US); RIHAN, Ali, A., Whitehouse, OH 43571 (US)
(74) Representative: Surventis Global IP Association
(86) International application number: PCT/EP2020/088016
(87) International publication number: WO 2021/136801

(56) References cited:
- EP-A1- 1 805 271
- WO-A1-2016/008655
- WO-A1-2019/072553
- GB-A- 1 528 802
- US-A- 5 439 988
- US-A- 5 952 452

## Description

The present invention relates to the use of a branched OH-functional polyester. Also described is a clearcoat coating material composition comprising an OH-functional (meth)acrylic copolymer (A1), a branched OH-functional polyester (A2) in an amount in the range of from 1.0 wt.-% to 15.0 wt.-%, based on the total solids content of the coating material composition, which is obtainable by performing steps (a), (b) and (c), and at least one crosslinking agent (B1), which is different from both constituents (A1) and (A2) and which contains crosslinkable functional groups, which can be at least crosslinked with OH-functional groups, a method of coating a substrate including a step of applying to an optionally pre-coated substrate the clearcoat coating material composition, a coated substrate, which is obtainable by the method, and a use of the branched OH-functional polyester (A2) as flow enhancer in a clearcoat coating material application for spray applying said clearcoat coating material application onto an optionally pre-coated substrate and/or as levelling agent.

### Background of the invention

In the automotive industry it is in particular for environmental reasons desirable and necessary to reduce the VOC-content, i.e. the content of volatile organic compounds, in particular organic solvents, present in coating material composition used for coating of substrates suitable for the use in the automotive industry such as vehicle parts, as much as possible. This lowering of the VOC-content can be achieved, e.g. by using aqueous (waterborne) coating material compositions rather than solvent-based (solventborne) coating material compositions. Alternatively, reducing the VOC-content can be achieved by increasing the solids content, i.e. the non-volatile content, in particular when the coating material compositions are solventborne, which is in particular still the case for most commercially available clearcoat compositions.

However, while increasing the solids content, of course, automatically leads to a lowering of the VOC content, there are nonetheless limits for this approach as the organic solvents present in solventborne coating material compositions play an important role with respect to the spray ability of the coating compositions during their spray application as the solvents are important for achieving a sufficient spray viscosity. When the amounts of solvents are too low, spray ability difficulties arise and, furthermore, a degraded and only inferior appearance of the resulting coating may be observed, when there is not a sufficient amount of solvents available to facilitate polymer flow and achieve a sufficient levelling of the coating on the substrate. In other words, although it is desirable to lower the VOC content as much as possible, there are limits as to how much solvents actually can be removed from the system used.

Furthermore, when using coating material compositions such as solventborne coating material compositions in OEM applications, but in particular also in refinish applications, it is important to consider that for example even in only one country as the USA depending on the geographic region different kinds of environmental conditions can be present such as a comparably humid climate as in Maryland, a significantly less humid climate than in Maryland as in California, and, of course humid conditions in between those two states in various other states. The climate present, in particular the humidity, but also the temperature, can have an influence on the spray process when applying in particular solventborne coating material compositions via spray application. For example, a degraded and only inferior appearance of the resulting coatings may be observed in more humid areas than in California. In particular, the coating may suffer from die-back issues under such rather humid conditions. Die-back is a term used to describe a coating appearance defect in the coating film, which manifests after the initial cure of the coating has been achieved. It resembles a pinching or micro-wrinkle within the coating film formed and is the result of a non-uniform accommodation of stresses in the coating caused by continued shrinkage in the film during the final crosslinking phase after completion of its initial cure. If mobility of the polymer present within the film is too inhibited before the final crosslinking of the coating film has been achieved, the die-back defects are manifested. Die-back defects in particular lead to inferior, i.e. lower, DOI (distinctiveness of image) values. A higher humidity may result in a faster loss of polymer mobility in the film, thereby causing die-back to be manifested in the film.

It is known to incorporate conventional polyesters into coating material compositions in order to improve the aforementioned flow and levelling properties, but these polyesters can only be used at comparably low solids contents levels of the coating material compositions in order to preserve a desirable and sufficient spray viscosity. Moreover, these conventional polyesters often are hydrolytically unstable and thus in particular have disadvantages when used in topcoats such as clearcoats as the outermost layer of a multilayer structure for durability reasons.

Non-conventional polyesters are disclosed in WO 2016/008655 A1, which relates to coating compositions comprising hyperbranched or dendritic polyols for improving the flexibility of coatings prepared from these compositions. In particular, the coatings display an excellent stone chip resistance due to their improved flexibility. In order to achieve the desired flexibility/stone chip resistance the coating compositions must contain comparably high amounts of the aforementioned polyols from about 5% to about 60% by weight, based on the total amount of film-forming materials contained in the coating compositions. US 5 952 452 A discloses in example 15 a clearcoat comprising a polyisocyanate cross-linking agent (Desmodur N3390) and a branched hydroxy-functional polyester made by reacting a polyacid (made by reacting mono pentaerythritol and MHHPA (methylhexahydrophthalic anhydride) and pivalic acid glycidyl ester. US 5 952 452 A is concerned with the reduction of volatile organic compounds (VOC) in clearcoat compositions.

Thus, there is a need for clearcoat coating material compositions, which allow for being provided with a high solids-content, but which exhibit nonetheless an excellent spray ability when used in spray applications without having to further increase the VOC-content, and from which cured clear coatings on pre-coated substrates can be obtained, which have an excellent appearance in terms of a minimized or even non-existent die-back, even when the spray application is performed at comparably high temperatures of e.g. >85°F (>29.4°C) and at comparably high relative humidity (RH) of, e.g. 65% RH or even >85% RH.

### Problem

It has been therefore an object to provide clearcoat coating material compositions, which allow for being provided with a high solids-content, but which exhibit nonetheless an excellent spray ability when used in spray applications without having to further increase the VOC-content, and from which cured clear coatings on pre-coated substrates can be obtained, which have an excellent appearance in terms of a minimized or even non-existent die-back, even when the spray application is performed at comparably high temperatures of e.g. >85°F (>29.4°C) and at comparably high relative humidity (RH) of e.g. 65% RH or even >85% RH.

### Solution

This object has been solved by the subject-matter of the claims of the present application as well as by the preferred embodiments thereof disclosed in this specification, i.e. by the subject matter described herein.

A first disclosure is a clearcoat coating material composition comprising
(A1) at least one OH-functional (meth)acrylic copolymer as constituent (A1),
(A2) at least one branched OH-functional polyester as constituent (A2), which is obtainable by performing steps (a), (b) and (c), namely by
   (a) reacting at least one polyol comprising at least three OH-groups with at least one aliphatic dicarboxylic acid having from 6 to 36 carbon atoms and/or an anhydride and/or ester thereof to form a OH-functional first intermediate product;
   (b) reacting the first intermediate product obtained from step (a) with at least one cyclic carboxylic acid anhydride to form a carboxylic acid-functional second intermediate product; and
   (c) reacting the second intermediate product obtained from step (b) with at least one epoxide-functional compound having one epoxide group to form the branched OH-functional polyester, and
(B1) at least one crosslinking agent as constituent (B1), which is different from both constituents (A1) and (A2) and
which contains crosslinkable functional groups, which can be crosslinked with OH-functional groups,
wherein the at least one branched OH-functional polyester (A2) is present in the clearcoat coating material composition in an amount in the range of from 1.0 wt.-% to 15.0 wt.-%, based on the total solids content of the coating material composition.

A further disclosure is a method of coating a substrate, comprising at least one step of applying to an optionally pre-coated substrate the inventive clearcoat coating material composition to form at least one coating film onto the optionally pre-coated substrate and at least one further step of curing the at least one coating film to obtain at least one cured coating layer onto the substrate.

A further disclosure is a coated substrate, which is obtainable by the method.

Subject-matter of the present invention is a use of at least one branched OH-functional polyester (A2) as defined above and as further defined hereinafter as flow enhancer in a clearcoat coating material application for spray applying said clearcoat coating material onto an optionally pre-coated substrate and/or as levelling agent.

It has been surprisingly found that - although the clearcoat coating material composition allows for being provided in form of a high solids-content composition -, it nonetheless exhibits excellent spray ability properties when used in spray applications without the need of having to further increase its VOC-content by adding more organic solvents. In contrast, it has been found that the VOC-content can be effectively lowered, in particular by making use of the branched OH-functional polyester present as constituent (A2). It has been in particular surprisingly found that the excellent spray ability of the clearcoat coating material composition when used in spray applications, in particular the excellent and enhanced flow during the spray application and the achieved good levelling properties, are due to the presence of the branched OH-functional polyester present as constituent (A2) in the clearcoat coating material composition, as these effects are not observed when using a clearcoat coating material composition, which does not contain said branched OH-functional polyester without having to use more organic solvents.

It has been further surprisingly found that clear coatings on pre-coated substrates can be obtained from the clearcoat coating material composition by making use of spray application, which coatings have an excellent appearance in terms of a minimized or even non-existent die-back, even when the spray application is performed in an environment with comparably high temperatures of e.g. >85°F (>29.4°C) and with comparably high relative humidity (RH) of e.g. 65% RH or even >85% RH. In particular, the coatings obtained from the coating material composition have been found to have excellent DOI values. It has been in particular surprisingly found that this is achieved due to the presence of the branched OH-functional polyester present as constituent (A2) in the clearcoat coating material composition as this effect is not observed when using a clearcoat coating material composition, which does not contain said branched OH-functional polyester. It has been further found that both the branched OH-functional polyester present as constituent (A2) and the at least one OH-functional (meth)acrylic copolymer present as constituent (A1) in the clearcoat coating material composition retain sufficient mobility throughout the entire crosslinking process of film curing to avoid die-back, thus an thereby demonstrating desirable flow and leveling characteristics.

Moreover, it has been surprisingly found the branched OH-functional polyester present as constituent (A2) is hydrolytically stable, especially to a higher extent than a conventional polyester, in particular when used in combination with the at least one OH-functional (meth)acrylic copolymer, which is also present in the clearcoat coating material composition, which is advantageous as far as the durability of the obtained coating is concerned, as an applied clearcoat derived from the clearcoat coating material composition represents the outermost layer of a multilayer coating system. This is especially advantageous, when the clearcoats as part of a multilayer structure is applied on vehicle parts or bodies for use in the automotive industry that are utilized/operated in areas, wherein the climate is at least for a good part of the year rather humid, e.g., wherein the relative humidity (RH) is >65% or is even >85%.

Furthermore, it has been surprisingly found a comparably high cured crosslink density of the clearcoat derived from the clearcoat coating material composition can be achieved without introducing brittleness despite using the branched OH-functional polyester.

### Detailed description of the invention

The term "comprising" in the sense of the present invention, in connection for example with the coating material composition preferably has the meaning of "consisting of". With regard to the coating material composition it is possible - in addition to the mandatory components present therein - for one or more of the further components identified hereinafter and included optionally in the coating material composition to be included therein. All these components may in each case be present in their preferred embodiments as identified below.

### Clearcoat coating material composition and optional constituent (A3)

The clearcoat coating material composition comprises at least one OH-functional (meth)acrylic copolymer as constituent (A1), at least one branched OH-functional polyester as constituent (A2) and at least one crosslinking agent as constituent (B1).

The coating material compositions are employed in particular in the technologically and esthetically particularly demanding field of automotive OEM finishing and also of automotive refinish.

The proportions and amounts in wt.-% (% by weight) of all components present in each the coating material composition add up in each case to 100 wt.-%, based on the total weight of the coating material composition.

The term "clear coat", "clearcoat" or "clear coating" is known to a person skilled in the art and represent a substantially transparent or transparent outermost layer of a multilayer coating structure applied to a substrate.

Preferably, the clearcoat coating material composition does not comprise more than 5 wt.-% of pigments and/or fillers since otherwise the transparency or desired clarity of the clearcoat coating layer produced from the composition could be affected. More preferably, the clearcoat coating material composition is free of any pigments and/or fillers, in particular of any effect pigments.

The term "pigment" is known to the skilled person, from DIN 55943 (date: October 2001), for example. A "pigment" in the sense of the present invention refers preferably to a component in powder or flake form which is substantially, preferably entirely, insoluble in the medium surrounding them, such as in one of the inventively used coating material compositions, for example. Pigments are preferably colorants and/or substances which can be used as pigment on account of their magnetic, electrical and/or electromagnetic properties. Pigments differ from "fillers" preferably in their refractive index, which for pigments is ≥ 1.7. The term "filler" is known to the skilled person, from DIN 55943 (date: October 2001), for example. "Fillers" for the purposes of the present invention preferably are components, which are substantially, preferably entirely, insoluble in the application medium, such as in one of the inventively used coating material compositions, for example, and which are used in particular for increasing the volume. "Fillers" in the sense of the present invention preferably differ from "pigments" in their refractive index, which for fillers is < 1.7. Examples of suitable fillers are kaolin, dolomite, calcite, chalk, calcium sulfate, barium sulfate, graphite, silicates such as magnesium silicates, especially corresponding phyllosilicates such as hectorite, bentonite, montmorillonite, talc and/or mica, silicas, especially fumed silicas, hydroxides such as aluminum hydroxide or magnesium hydroxide, or organic fillers such as textile fibers, cellulose fibers, polyethylene fibers or polymer powders; for further details, reference is made to Römpp Lexikon Lacke und Druckfarben, Georg Thieme Verlag, 1998, pages 250 ff., "Fillers". Examples of suitable pigments for are inorganic and organic coloring pigments. Examples of suitable inorganic coloring pigments are white pigments such as zinc white, zinc sulfide or lithopone; black pigments such as carbon black, iron manganese black or spinel black; chromatic pigments such as chromium oxide, chromium oxide hydrate green, cobalt green or ultramarine green, cobalt blue, ultramarine blue or manganese blue, ultramarine violet or cobalt violet and manganese violet, red iron oxide, cadmium sulfoselenide, molybdate red or ultramarine red; brown iron oxide, mixed brown, spinel phases and corundum phases or chromium orange; or yellow iron oxide, nickel titanium yellow, chromium titanium yellow, cadmium sulfide, cadmium zinc sulfide, chromium yellow or bismuth vanadate. Further inorganic coloring pigments are silicon dioxide, aluminum oxide, aluminum oxide hydrate, especially boehmit, titanium dioxide, zirconium oxide, cerium oxide, and mixtures thereof. Examples of suitable organic coloring pigments are monoazo pigments, disazo pigments, anthraquinone pigments, benzimidazole pigments, quinoacridone pigments, quinophthalone pigments, diketopyrrolopyrrol pigments, dioxazine pigments, indanthrone pigments, isoindoline pigments, isoindolinone pigments, azomethine pigments, thioindigo pigments metal complex pigments, perinone pigments, perylene pigments, phthalocyanine pigments or aniline black

Preferably, the coating material composition is a one-component (1K) coating material composition or is a two-component (2K) coating material composition, which is obtained by mixing at least one component (A) containing the at least constituents (A1) and (A2) with at least one component (B), which is prior to mixing it with component (A) separately stored from component (A) and which contains the at least constituent (B1), and optionally further with an additional diluent component (C) containing at least one organic solvent (A3). More preferably, it is a twocomponent (2K) coating material composition, which is obtained by mixing at least one component (A) containing the at least constituents (A1) and (A2) with at least one component (B), which is prior to mixing it with component (A) separately stored from component (A) and which contains the at least constituent (B1), and optionally further with an additional diluent component (C) containing at least one organic solvent (A3).

Preferably, the coating material composition is a solventborne, i.e. an organic solvent(s) based, coating material composition and further comprises as constituent (A3) at least one organic solvent. Thus, preferably, the coating material composition is not a waterborne, i.e. an aqueous, coating material composition.

The term "solventborne" in connection with the coating material compositions is understood preferably for the purposes of the present invention to mean that organic solvent(s), as solvent and/or as diluent, is present as the main constituent of all solvents and/or diluents present in each the coating material compositions, preferably in an amount of at least 35 wt.-%, based on the total weight of the coating material composition. Water may be present additionally in smaller proportions, preferably in an amount of < 20 wt.-%, more preferably < 10 wt.-%.

The coating material composition preferably includes - in case the composition is solventborne - an organic solvent(s) fraction of at least 40 wt.-%, more preferably of at least 45 wt.-%, very preferably of at least 50 wt.-%, based in each case on the total weight of the coating material composition. All conventional organic solvents known to those skilled in the art can be used as organic solvents. The term "organic solvent" is known to those skilled in the art, in particular from Council Directive 1999/13 / EC of 11 March 1999. Examples of such organic solvents would include heterocyclic, aliphatic, or aromatic hydrocarbons, mono- or polyhydric alcohols, especially methanol and/or ethanol, ethers, esters, ketones, and amides, such as, for example, N-methylpyrrolidone, N- ethylpyrrolidone, dimethylformamide, toluene, xylene, butanol, ethyl glycol and butyl glycol and also their acetates, butyl diglycol, diethylene glycol dimethyl ether, cyclohexanone, methyl ethyl ketone, methyl isobutyl ketone, acetone, isophorone, or mixtures thereof.

The coating material composition preferably includes - in case the composition is solventborne - a fraction of water that is < 20 wt.-%, more preferably in a range of from 0 to < 20 wt.-%, very preferably in a range of from
0.5 to 20 wt.-% or to 17.5 wt.-% or to 15 wt.-% or to 10 wt.-%, based in each case on the total weight of the coating material composition.

Preferably, the coating material composition has a total solids content, which is >30 wt.-%, preferably >33 wt.-%, based on the total weight of the coating material composition.

The total solids content of the coating material composition is preferably in a range of from >30 to 50 wt.-%, more preferably of from >33 to 45 wt.-%, based in each case on the total weight of the coating material composition. The total solids content, in other words the non-volatile fraction, is determined in accordance with the method described hereinafter.

### OH-functional (meth)acrylic copolymer as constituent (A1) and further optionally present film-forming resins present as constituent (A5)

Constituent (A1) functions as film-forming binder. For the purposes of the present invention, the term "binder" is understood in accordance with DIN EN ISO 4618 (German version, date: March 2007) to be the non-volatile constituent of a coating material composition, which is responsible for the film formation. Pigments and/or fillers contained therein are thus not subsumed under the term "binder". Preferably, the at least one (meth)acrylic copolymer is the main binder of the coating material composition. As the main binder in the sense of the present invention, a binder component is preferably referred to, when there is no other binder component in the coating material composition, which is present in a higher proportion based on the total weight of the coating material composition.

The term "(meth) acryl" or "(meth) acrylate" or (meth)acrylic" in the context of the present invention in each case comprises the meanings "methacryl" and/or "acryl" "methacrylic" and/or "acrylic" or "methacrylate" and/or "acrylate". Therefore, a "(meth)acrylic coolymer" in general may be formed from only "acrylic monomers", only "methacrylic monomers" or "acrylic and methacrylic monomers". However, polymerizable monomers other than acrylic and/or methacrylic monomers as e.g. styrene and the like may also be contained in a "(meth)acrylic copolymer". In other words a (meth)acrylic polymer may consist of only acrylic and/or methacrylic monomer units but does not have to. The notation "(meth)acrylate polymer or copolymer" or "(meth)acrylic polymer or copolymer" is intended to mean that the polymer/copolymer (polymer skeleton/backbone) is formed predominantly, i.e. preferably more than 50% or more than 75% of the monomer units used, from monomers having a (meth)acrylate group. In the preparation of a (meth)acrylic copolymer, preferably more than 50% or 75% of the monomers thus have a (meth)acrylate group. However, the use of further monomers as comonomers such as copolymerizable vinyl monomers, e.g. styrene, for its preparation is not excluded.

The (meth)acrylic copolymer (A1) is OH-functional. Hydroxyl-containing monomers include hydroxy alkyl esters of acrylic or methacrylic acid, which can be used for preparing (A1). Non-limiting examples of hydroxyl-functional monomers include hydroxyethyl(meth)acrylate, hydroxypropyl(meth)acrylates, hydroxybutyl(meth)acrylates, hydroxyhexyl(meth)acrylates, propylene glycol mono(meth)acrylate, 2,3-dihydroxypropyl(meth)acrylate, pentaerythritol mono(meth)acrylate, polypropylene glycol mono(meth)acrylates, polyethylene glycol mono(meth)acrylates, reaction products of these with epsilon-caprolactone, and other hydroxyalkyl(meth)acrylates having branched or linear alkyl groups of up to about 10 carbons, and mixtures of these, where the term "(meth)acrylate" indicates either or both of the methacrylate and acrylate esters. Generally, at least about 5 % by weight hydroxyl-functional monomer is included in the polymer. Hydroxyl groups on a vinyl polymer such as an acrylic polymer can be generated by other means, such as, for example, the ring opening of a glycidyl group, for example from copolymerized glycidyl methacrylate, by an organic acid or an amine.

Hydroxyl functionality may also be introduced through thio-alcohol compounds, including, without limitation, 3-mercapto-1-propanol, 3-mercapto-2-butanol, 11-mercapto-1-undecanol, 1-mercapto-2-propanol, 2-mercaptoethanol, 6-mercapto-1-hexanol, 2-mercaptobenzyl alcohol, 3-mercapto-1,2-proanediol, 4-mercapto-1-butanol, and combinations of these. Any of these methods may be used to prepare a useful hydroxyl-functional acrylic polymer.

Examples of suitable comonomers that may be used include, without limitation, α,β-ethylenically unsaturated monocarboxylic acids containing 3 to 5 carbon atoms such as acrylic, methacrylic, and crotonic acids and the alkyl and cycloalkyl esters, nitriles, and amides of acrylic acid, methacrylic acid, and crotonic acid; α,β-ethylenically unsaturated dicarboxylic acids containing 4 to 6 carbon atoms and the anhydrides, monoesters, and diesters of those acids; vinyl esters, vinyl ethers, vinyl ketones, and aromatic or heterocyclic aliphatic vinyl compounds. Representative examples of suitable esters of acrylic, methacrylic, and crotonic acids include, without limitation, those esters from reaction with saturated aliphatic alcohols containing 1 to 20 carbon atoms, such as methyl, ethyl, propyl, isopropyl, n-butyl, isobutyl, tert-butyl, hexyl, 2-ethylhexyl, dodecyl, 3,3,5-trimethylhexyl, stearyl, lauryl, cyclohexyl, alkyl-substituted cyclohexyl, alkanol-substituted cyclohexyl, such as 2-tert-butyl and 4-tert-butyl cyclohexyl, 4-cyclohexyl-1-butyl, 2-tert-butyl cyclohexyl, 4-tert-butyl cyclohexyl, 3,3,5,5,-tetramethyl cyclohexyl, tetrahydrofurfuryl, and isobornyl acrylates, methacrylates, and crotonates; unsaturated dialkanoic acids and anhydrides such as fumaric, maleic, itaconic acids and anhydrides and their mono- and diesters with alcohols such as methanol, ethanol, propanol, isopropanol, butanol, isobutanol, and tert-butanol, like maleic anhydride, maleic acid dimethyl ester and maleic acid monohexyl ester; vinyl acetate, vinyl propionate, vinyl ethyl ether, and vinyl ethyl ketone; styrene, a-methyl styrene, vinyl toluene, 2-vinyl pyrrolidone, and p-tert-butylstyrene.

The (meth)acrylic polymer (A1) may be prepared using conventional techniques, such as by heating the monomers in the presence of a polymerization initiating agent and optionally a chain transfer agent. The polymerization may be carried out in solution, for example. Typical initiators are organic peroxides such as dialkyl peroxides such as di-t-butyl peroxide, peroxyesters such as t-butyl peroxy 2-ethylhexanoate, and t-butyl peracetate, peroxydicarbonates, diacyl peroxides, hydroperoxides such as t-butyl hydroperoxide, and peroxyketals; azo compounds such as 2,2'azobis(2-methylbutanenitrile) and 1,1'-azobis(cyclohexanecarbonitrile); and combinations of these. Typical chain transfer agents are mercaptans such as octyl mercaptan, n- or tert-dodecyl mercaptan; halogenated compounds, thiosalicylic acid, mercaptoacetic acid, mercaptoethanol and the other thiol alcohols already mentioned, and dimeric alpha-methyl styrene.

The polymerization reaction is usually carried out at temperatures from about 20 °C to about 200 °C. The reaction may conveniently be done at the temperature at which the solvent or solvent mixture refluxes, although with proper control a temperature below the reflux may be maintained. The initiator should be chosen to match the temperature at which the reaction is carried out, so that the half-life of the initiator at that temperature should preferably be no more than about thirty minutes. Further details of addition polymerization generally and of polymerization of mixtures including (meth)acrylate monomers is readily available in the polymer art. The solvent or solvent mixture is generally heated to the reaction temperature and the monomers and initiator(s) are added at a controlled rate over a period of time, usually between 2 and 6 hours. A chain transfer agent or additional solvent may be fed in also at a controlled rate during this time. The temperature of the mixture is then maintained for a period of time to complete the reaction. Optionally, additional initiator may be added to ensure complete conversion

The at least one (meth)acrylic polymer (A1) is preferably present in the clearcoat coating material composition in an amount in the range of from 5.0 wt.-% to 85.0 wt.-%, based on the total solids content of the coating material composition. More preferably, the at least one (meth)acrylic polymer (A1) is present in the clearcoat coating material composition in an amount in the range of from 10.0 wt.-% to 80.0 wt.-%, yet more preferably of from 15.0 wt.-% to 75.0 wt.-%, even more preferably of from 20.0 wt.-% to 70.0 wt.-%, still more preferably of from 25.0 to 65.0 wt.-%, most preferably of from 30.0 to 60.0 wt.-%, in each case based on the total solids content of the coating material composition.

The coating material composition may comprise - besides the at least one (meth)acrylic copolymer at least one further polymer as constituent (A5), which also functions as binder, different from both (A1) and (A2), but also from (B1). The term "polymer" is known to the person skilled in the art and, for the purposes of the present invention, encompasses polyadducts and polymerizates as well as polycondensates. The term "polymer" includes both homopolymers and copolymers.

Such an optional constituent (A5) can be preferably crosslinked with the crosslinkable functional groups of the crosslinking agent (B1) and may comprise crosslinkable groups for this purpose. The crosslinkable groups may also be OH-groups as in the case of (A1), but may also be different therefrom, i.e. can be selected from the group consisting of primary amino groups, secondary amino groups, thiol groups, carboxyl groups and carbamate groups. Preferably, an optionally present constituent (A5) has functional hydroxyl groups (OH-groups) and/or carbamate groups, in particular hydroxyl groups.

Optional constituent (A5) may be e.g. an carbamate-functional (meth)acrylic copolymer that may additionally comprise OH-groups. Likewise, e.g. polyethers, polyurethanes, polyols based on natural oils, such as those available under the trademark Polycin^{®} from Vertellus Specialties Inc., Indianapolis, Ind., for example a polyol based on castor oil may be used as constituent (A5).

### Branched OH-functional polyester as constituent (A2)

The at least one branched OH-functional polyester (A2) is present in the clearcoat coating material composition in an amount in the range of from 1.0 wt.-% to 15.0 wt.-%, based on the total solids content of the coating material composition. Preferably, the at least one branched OH-functional polyester (A2) is present in the clearcoat coating material composition in an amount in the range of from 1.1 wt.-% to 13.5 wt.-%, more preferably of from 1.5 wt.-% to 12.5 wt.-%, even more preferably of from 2.0 wt.-% to 12.0 wt.-%, still more preferably of from 3.0 to 11.5 wt.-%, most preferably of from 4.0 to 10.5 wt.-%, in each case based on the total solids content of the coating material composition.

Preferably, the at least one branched OH-functional polyester (A2) is a polyester polyol. Preferably, the at least one branched OH-functional polyester (A2) has more than two OH-groups.

Preferably, the at least one branched OH-functional polyester (A2) additionally comprises carboxylic acid groups. Preferably, the at least one branched OH-functional polyester (A2) has an acid number below 20 mg KOH/g of polyester solids, more preferably has an acid number in the range of from 3 to 15 mg KOH/g of polyester solids, even more preferably has an acid number in the range of from 5 to 12 mg KOH/g of polyester solids.

Preferably, the at least one branched OH-functional polyester (A2) has an OH-number in the range of from 100 to 145 mg KOH/g of polyester solids, more preferably in the range of from 115 to 130 mg KOH/g of polyester solids.

Polyesters suitable for use as constituent (A2) in the coating material composition are, e.g., disclosed in WO 2016/008655 A1.

The at least one branched OH-functional polyester as constituent (A2) is obtainable by performing steps (a), (b) and (c), namely by
(a) reacting at least one polyol comprising at least three OH-groups with at least one aliphatic dicarboxylic acid having from 6 to 36 carbon atoms and/or an anhydride and/or ester thereof to form a OH-functional first intermediate product;
(b) reacting the first intermediate product obtained from step (a) with at least one cyclic carboxylic acid anhydride to form a carboxylic acid-functional second intermediate product; and
(c) reacting the second intermediate product obtained from step (b) with at least one epoxide-functional compound having one epoxide group to form the branched OH-functional polyester.

### Preparation of constituent (A2) - step (a)

The aliphatic dicarboxylic acid having from 6 to 36 carbon atoms and/or an anhydride and/or ester thereof may be linear, branched, or cyclic, whereby cyclic dicarboxylic acids most preferably include a noncyclic segment of at least about 6 carbon atoms.

Non-limiting examples of suitable dicarboxylic acids include adipic acid, suberic acid, azelaic acid, sebacic acid, undecanedioic acid (brassylic acid), dodecanedioic acid, traumatic acid, hexadecanedioic acid (thapsic acid), octadecanedioic acid, tetradecanedioic acid, and dimer fatty acids having 36 carbon atoms. In various embodiments, α,ω-dicarboxylic acids and dimer fatty acids having 36 carbon atoms are preferred. It is known that dimer fatty acids having 36 carbon atoms may have multiple isomers. Dimer fatty acids are commercially available, for example from BASF under the trademark EMPOL^{®}, from Arizona Chemical under the trademark UNIDYME^{™}, from Croda International Plc under the trademark Pripol^{™}, and from Emery Oleochemicals as EMERY^{®} Dimer Acids. In the production of dimer fatty acids, it is generally unavoidable to obtain products which still contain minor amounts of monomeric fatty acids, and also trimer fatty acids and higher fatty acids. Preferred dimer fatty acids are those containing only am minimum amount of monomeric fatty acids and trimer or higher fatty acids.

Anhydride and/or esters of the dicarboxylic acids having from 6 to 36 carbon atoms include their mono- or diesters with aliphatic alcohols having 1 to 4 carbon atoms, preferably the methyl and ethyl esters, as well as the anhydrides. The term "anhydrides" includes their intramolecular anhydrides and intermolecular anhydrides. Intermolecular anhydrides e.g. include anhydrides formed by condensation reaction of carboxyl groups of two of the afore-mentioned dicarboxylic acid molecules as well as the anhydride of the afore-mentioned dicarboxylic acids with an inorganic acid such as hydrochloric acid.

The aliphatic dicarboxylic acid having from 6 to 36 carbon atoms is reacted with a polyol comprising at least three hydroxyl groups. The hydroxyl groups of the polyol can be primary, secondary, and/or tertiary hydroxyl groups.

The polyol may be selected from the group consisting of triols, dimers of triols, tetrols, dimers of tetrols, trimers of tetrols, and sugar alcohols. Non-limiting examples of suitable polyols having three or more hydroxyl groups include glycerol, trimethylolmethane, trimethylolethane, trimethylolpropane, 2,2,3-trimethylolbutane-1,4-diol, 1,2,4-butanetriol, 1,2,6-hexanetriol, tris(hydroxymethyl)aminomethane, tris(hydroxyethyl)amine, tris(hydroxypropyl)amine, erythritol, pentaerythritol, diglycerol, triglycerol or higher condensates of glycerol, di(trimethylolpropane), di(pentaerythritol), tri(pentaerythritol), pentaerythritol ethoxylate, pentaerythritol propoxylate, trishydroxymethyl isocyanurate, tris(hydroxyethyl) isocyanurate (THEIC), tris(hydroxypropyl) isocyanurate, inositols or sugars, such as glucose, fructose or sucrose, for example, sugar alcohols such as xylitol, sorbitol, mannitol, threitol, erythritol, adonitol (ribitol), arabitol (lyxitol), xylitol, duicitol (galactitol) isomalt, polyetherols with a functionality of three or more, based on alcohols with a functionality of three reacted with ethylene oxide, propylene oxide and/or butylene oxide.

Preferably, the first polyol of step (a) is at least one of the group consisting of erythritol, pentaerythritol, dipentaerythritol, tripentaerythritol, trimethylolethane, trimethylolpropane, trimethylolbutane, glycerol, ditrimethylolethane, ditrimethylolpropane, pentaerythritol ethoxylate, and pentaerythritol propoxylate.

Preferably, in step (a) for preparing the at least one branched OH-functional polyester as constituent (A2) the ratio of moles of the polyol to moles of the dicarboxylic acid and/or an anhydride and/or ester thereof is from 2.0 to 2.2, more preferably from 2.0 to 2.07 mole of the polyol per mole of the dicarboxylic acid and/or an anhydride and/or ester thereof. Particularly preferably, on average one hydroxyl group of each polyol molecule is reacted with the dicarboxylic acid in step (a).

The esterification step (a) can be carried out by known, standard methods. For example, this reaction is conventionally carried out at temperatures of between about 60 °C and about 280 °C in the presence, if desired, of an appropriate esterification catalyst. Typical catalysts for the esterification polymerization are protonic acids and Lewis acids, for example sulfuric acid, para-toluenesulfonic acid, sulfates and hydrogen sulfates, such as sodium hydrogen sulfate, phosphoric acid, phosphonic acid, hypophosphorous acid, titanium alkoxides, and dialkyltin oxides, for example dibutyltin oxide, dibutyltin dilaurate, lithium octanoate, under reflux with small quantities of a suitable solvent as entraining agent such as an aromatic hydrocarbon, for example xylene, or a (cyclo)aliphatic hydrocarbon, for example cyclohexane. As a non-limiting, specific example, the polyester may include stannous octoate or dibutyltin oxide. An acidic inorganic, organometallic, or organic catalyst can be used in an amount from 0.1 % by weight to 10 % by weight, preferably from 0.2 % by weight to 2 % by weight, based on total weight of the reactants. It may be desirable to carry out the reaction step (a) free of catalyst to avoid or minimize side reactions during subsequent steps.

The esterification of step (a) can be carried out in bulk or in the presence of a solvent that is nonreactive toward the reactants. Such solvents are preferably aprotic solvents. Non-limiting examples of suitable solvents include hydrocarbons such as paraffins or aromatics. In some embodiments it may be preferred to use n-heptane, cyclohexane, toluene, ortho-xylene, meta-xylene, para-xylene, xylene isomer mixtures, ethylbenzene, chlorobenzene and ortho- and meta-dichlorobenzene. Other solvents that may be used in the absence of acidic catalysts are ethers, such as dioxane tetrahydrofuran, for example, and ketones such as methyl ethyl ketone and methyl isobutyl ketone, for example. The solvent may be used to aid in removing by-product of the esterification reaction, azeotropically.

The amount of solvent that can be used may be at least 0.1 % by weight or at least 1 % by weight or at least 5 % by weight, based on the weight of the starting reactants. Higher amounts of solvent may be used, but it is preferred to keep the concentration of reactants high enough to permit the reaction to be carried out in a commercially viable length of time. Examples of ranges of the solvent that may be employed are from 0.1 % by weight to about 20 % by weight, or from about 1 % by weight to about 15 % by weight, or from about 5 % by weight to about 10% by weight, based in each case on the weight of the starting reactants.

The reaction may be carried out in the presence of a water-removing agent, for example molecular sieves, especially molecular sieve 4 Å, MgSO₄ and Na₂SO₄.

The reaction of step (a) is preferably carried out at temperatures of 60 °C to 250 °C, more preferred at temperatures of 100 °C to 240 °C. Even more preferred, the reaction of step (a) is carried out at temperatures of 150 °C to 235 °C. The reaction time depends upon known factors, which include temperature, concentration of reactants, and presence and identity of catalyst, if any. Typical reaction times may be from about 1 to about 20 hours.

To minimize final volatile organic content, as much of the solvent used to azeotrope the by-product from step (a) as is practical may be removed after completion of the reaction of step (a). Small amounts of solvents selected for their performance in the final resin can be used throughout the rest of the synthesis, for example as a flush following a reagent addition. Solvents that can react with anhydrides or epoxides, such as active hydrogen-containing compounds like hydroxy-functional solvents (e.g., alcohols and monoethers of glycols), are preferably avoided during both step (a) and subsequent reaction steps. After step (a), the reaction temperature is preferably kept below a temperature at which condensation-type esterification reactions could take place, for example kept below 150 °C, for the remainder of the synthesis to minimize the chance of condensation-type esterification reactions which, after this stage of the synthesis, would have undesirable effects on the molecular weight and architecture. For example, further esterification could produce unwanted branching or an undesirably increased molecular weight. The temperature after step (a) before carrying out step (b) may be kept below 145 °C, preferably below 140 °C, or even below 135 °C or 130 °C depending on whether a catalyst is used during step (a) and the nature of any catalyst used.

### Preparation of constituent (A2) - step (b)

The cyclic carboxylic acid anhydride reacts with at least one of the hydroxyl groups of the hydroxyl-functional first intermediate product to form the second intermediate product having at least one carboxyl group. Preferably, the cyclic carboxylic acid anhydride is reacted with all or substantially all of the hydroxyl groups of the first intermediate product to form the second intermediate product. The cyclic carboxylic acid anhydride reacted in step (b) may be either an aromatic or aliphatic cyclic anhydride.

Preferably, the cyclic carboxylic acid anhydride is at least one of maleic anhydride, hexahydrophthalic anhydride, methylhexahydrophthalic anhydride, tetrahydrophthalic anhydride, phthalic anhydride, succinic anhydride, trimellitic anhydride, methyltetrahydrophthalic anhydride, adipic anhydride, glutaric anhydride, malonic anhydride, itaconic acid anhydride, 5-methyl-5-nobornenedicarboxylic acid anhydride, 1,2-cyclohexanedicarboxylic acid anhydride, isatoic acid anhydride, diphenic acid anhydride, substituted anhydrides, particularly including lower-alkyl substituted acid anhydrides such as butylsuccinic acid anhydride, hexylsuccinic acid anhydride, octylsuccinic acid anhydride, butylmaleic acid anhydride, pentylmaleic acid anhydride, hexylmaleic acid anhydride, octylmaleic acid anhydride, butylglutaric acid anhydride, hexylglutaric acid anhydride, heptylglutaric acid anhydride, octylglutaric acid anhydride, alkylcyclohexanedicarboxylic acid anhydrides and alkylphthalic acid anhydrides such as 4-n-butylphthalic acid anhydride, hexylphthalic acid anhydride, and octylphthalic acid anhydride.

Even more preferred, the carboxylic acid anhydride comprises or is hexahydrophthalic anhydride.

The reaction of step (b) provides a second intermediate product with a carboxylic acid group for each molecule of cyclic carboxylic acid anhydride reacted with the hydroxyl-functional first intermediate product of step (a). Preferably, the equivalent ratio of the cyclic carboxylic acid anhydride to the first intermediate product is from 0.8 to 1.0, more preferably from 0.85 to 1.0, and most preferably from 0.9 to 1.0 equivalents of anhydride groups per equivalent of hydroxyl groups. Particularly preferred, one molecule or substantially one molecule of hexahydrophthalic anhydride reacts with each hydroxyl group of the first intermediate product to form the second intermediate product. It is most preferred that substantially all hydroxyl groups of the hydroxyl-functional first intermediate product are reacted with the carboxylic acid anhydride to provide an ester of the hydroxyl group and a carboxylic acid group from opening the cyclic anhydride.

Preferably, in step (b) for preparing the at least one branched OH-functional polyester as constituent (A2) the equivalent ratio of hydroxyl groups of the first intermediate product to anhydride groups of the cyclic carboxylic acid anhydride is from 1.0 to 1.25 equivalents of hydroxyl groups per carboxylic anhydride groups.

The anhydride ring-opening reaction of step (b) is exothermic. The reaction temperature can be controlled, for example to not exceed about 150 °C, by dividing carboxylic acid anhydride reactant addition into two or more added portions. For example, a first added portion may be about one-third to about one-half of the carboxylic acid anhydride and a second portion may be the balance of the carboxylic acid anhydride being reacted in step (b). The temperature of the reaction mixture may be allowed to cool to about 90 °C to 95 °C before each portion is added. After the first portion is added, the reaction mixture may be heated to about 110 °C to 115 °C, or higher, resulting in an exotherm that may be allowed to carry the temperature of the reaction mixture upward, but not to exceed the target maximum, for example 150 °C. After the exotherm, the reaction mixture may be cooled to about 90 °C to 95 °C for a second anhydride addition. Similarly, after the second anhydride addition has been completed, the reaction mixture may be heated to about 110 °C to 115 °C, or higher, after which the reaction exotherm, (and additional heat, if needed), are used to bring the temperature of the reaction mixture up to, for example from about 135 °C to about 145 °C or from about 140 °C to about 145 °C, where the reaction mixture is held to allow the reaction to complete. Again, the batch should preferably not exceed 150 °C.

### Preparation of constituent (A2) - step (c)

In a third step (c), from preferably at least two carboxylic acid groups up to all the carboxylic acid groups of the second intermediate product are reacted with an epoxide-functional compound having one epoxide group (i.e. a mono-epoxide compound) to form the hyperbranched polyester polyol.

Mono-epoxide compounds are well-known in the art, and may be characterized by the general formula: 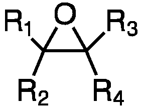 where R₁, R₂, R₃ and R₄ are each independently hydrogen or an organic radical, with the proviso that at least one of R₁ to R₄ is other than hydrogen and may contain unsaturation or heteroatoms or two of R₁ to R₄ may form a cyclic ring, which may contain unsaturation or heteroatoms.

Particularly preferred mono-epoxides of the above formula are those, wherein R₁ = CH₂-O-(C=O)ₙ-R^{a} with n being 0 or 1 and R^{a} being a branched or linear, saturated or unsaturated hydrocarbon residue having 1 to 30, preferably 1 to 20, more preferred 1 to 16, most preferred 4 to 14 or even more preferred 6 to 12 or 8 to 10 carbon atoms; and R₂ = R₃ = R₄ = H. In case n = 1, the formula depicts a glycidyl ester, and in case n = 0, the formula depicts a glycidyl ether.

For example, the epoxide-functional compound may be an epoxy ester, particularly a glycidyl ester. Glycidyl esters can be prepared by reacting a monofunctional carboxylic acid with an epihalohydrin (e.g., epichlorohydrin) under conditions well known in the art. Examples of glycidyl esters are glycidyl acetate, glycidyl propionate, glycidyl methyl maleate, glycidyl stearate, glycidyl benzoate, and glycidyl oleate. Among useful glycidyl esters are those having an alkyl group having from 7 to 17 carbon atoms. A particularly preferred glycidyl ester is a glycidyl ester of a saturated tertiary monocarboxylic acid having 9 to11 carbon atoms. Preferably, the monofunctional carboxylic acid used to produce the glycidyl esters is a neoalkanoic acid such as, without limitation, neodecanoic or neononanoic acid. Glycidyl esters of neoacids are commercially available, e.g., under the trademark Cardura^{®} from Momentive Specialty Chemicals, Inc., Columbus, Ohio.

Another useful class of monoepoxides is glycidyl ethers. Glycidyl ethers can be prepared by the reaction of monofunctional alcohols (e.g., n-butanol, propanol, 2-ethylhexanol, dodecanol, phenol, cresol, cyclohexanol, benzyl alcohol) with an epihalohydrin (e.g., epichlorohydrin). Useful glycidyl ethers include methyl glycidyl ether, ethyl glycidyl ether, propyl glycidyl ether, butyl glycidyl ether, pentyl glycidyl ether, hexyl glycidyl ether, heptyl glycidyl ether, octyl glycidyl ether, nonyl glycidyl ether, decyl glycidyl ether, undecyl glycidyl ether, dodecyl glycidyl ether, tridecyl glycidyl ether, tetradecyl glycidyl ether, pentadecyl glycidyl ether, hexadecyl glycidyl ether, heptadecyl glycidyl ether, octadecyl glycidyl ether, nonadecyl glycidyl ether, eicosyl glycidyl ether, beneicosyl glycidyl ether, docosyl glycidyl ether, tricosyl glycidyl ether, tetracosyl glycidyl ether, pentacosyl glycidyl ether, decenyl glycidyl ether, undecenyl glycidyl ether, tetradecenyl glycidyl ether, hexadecenyl glycidyl ether, heptadecenyl glycidyl ether, octadecenyl glycidyl ether, nonadecenyl glycidyl ether, eicosenyl glycidyl ether, beneicosenyl glycidyl ether, docosenyl glycidyl ether, tricosenyl glycidyl ether, tetracosenyl glycidyl ether and pentacosenyl glycidyl ether.

The equivalent ratio in step (c) of carboxylic acid groups of the second intermediate product to epoxide groups of the epoxide-functional compound may be from 1.0 to 2.5, or from 1.0 to 2.0, or from 1.0 to 1.5, or from 1.0 to 1.3, or from 1.0 to 1.1 equivalents of carboxylic acid groups per equivalents epoxide groups. The preferred range of equivalents of carboxylic acid groups to epoxide groups will vary, however, depending on whether the embodiment will be for a solvent borne or waterborne coating composition.

Preferably, every or substantially every carboxyl group of the second intermediate product is reacted with a monoepoxide compound.

### Crosslinking agent as constituent (B1)

Crosslinking agent as constituent (B1) is different from both constituents (A1) and (A2) and contains crosslinkable functional groups, which can be at least crosslinked with OH-functional groups. Preferably, the crosslinkable functional groups of the crosslinking agent are suitable for crosslinking at least with the OH-groups of constituent (A1) and optionally also with the OH-groups of constituent (A2).

Suitable crosslinking agents (B1) are aminoplast crosslinkers having active methylol, methylalkoxy or butylalkoxy groups, polyisocyanate crosslinkers, which may have blocked or unblocked (free) isocyanate groups, polyanhydrides and polyepoxide functional crosslinkers or curing agents, which could be reactive with the hydroxyls of (A1) as well as with hydroxyl and/or carboxylic acid groups of (A2).

Aminoplasts, or amino resins are known to a person skilled in the art. An aminoplast is obtained by reaction of an activated nitrogen with a lower molecular weight aldehyde, optionally with further reaction with an alcohol (preferably a mono-alcohol with one to four carbon atoms such as methanol, isopropanol, n-butanol, isobutanol, etc.) to form an ether group. Preferred examples of activated nitrogens are activated amines such as melamine, benzoguanamine, cyclohexylcarboguanamine, and acetoguanamine; ureas, including urea itself, thiourea, ethyleneurea, dihydroxyethyleneurea, and guanylurea; glycoluril; amides, such as dicyandiamide; and carbamate-functional compounds having at least one primary carbamate group or at least two secondary carbamate groups. The activated nitrogen is reacted with a lower molecular weight aldehyde. The aldehyde may be selected from formaldehyde, acetaldehyde, crotonaldehyde, benzaldehyde, or other aldehydes used in making aminoplast resins, although formaldehyde and acetaldehyde, especially formaldehyde, are preferred. The activated nitrogen groups are at least partially alkylolated with the aldehyde, and may be fully alkylolated; preferably the activated nitrogen groups are fully alkylolated. The reaction may be catalyzed by an acid.

The optional alkylol groups formed by the reaction of the activated nitrogen with aldehyde may be partially or fully etherified with one or more monofunctional alcohols. Suitable examples of the monofunctional alcohols include, without limitation, methanol, ethanol, n-propanol, isopropanol, n-butanol, isobutanol, tert-butyl alcohol, benzyl alcohol, and so on. Monofunctional alcohols having one to four carbon atoms and mixtures of these are preferred. The aminoplast may be at least partially etherified, and in various embodiments the aminoplast is fully etherified. For example, the aminoplast compounds may have a plurality of methylol and/or etherified methylol, butylol, or alkylol groups, which may be present in any combination and along with unsubstituted nitrogen hydrogens. Examples of suitable curing agent compounds include, without limitation, melamine formaldehyde resins, including monomeric or polymeric melamine resins and partially or fully alkylated melamine resins, and urea resins (e.g., methylol ureas such as urea formaldehyde resin, and alkoxy ureas such as butylated urea formaldehyde resin). One nonlimiting example of a fully etherified melamine-formaldehyde resin is hexamethoxymethyl melamine.

The alkylol groups are capable of self-reaction to form oligomeric and polymeric aminoplast crosslinking agents. Useful materials are characterized by a degree of polymerization. For melamine formaldehyde resins, it is preferred to use resins having a number average molecular weight less than about 2000, more preferably less than 1500, and even more preferably less than 1000.

A coating composition including aminoplast crosslinking agents may further include a strong acid catalyst to enhance the cure reaction. Such catalysts are well known in the art and include, for example, para-toluenesulfonic acid, dinonylnaphthalene disulfonic acid, dodecylbenzenesulfonic acid, phenyl acid phosphate, monobutyl maleate, butyl phosphate, and hydroxy phosphate ester. Strong acid catalysts are often blocked, e.g. with an amine.

Particularly for refinish coatings, polyisocyanate crosslinkers are commonly used. Examples of suitable polyisocyanate crosslinkers include, without limitation, alkylene polyisocyanates such as hexamethylene diisocyanate, 4- and/or 2,4,4-trimethylhexamethylene diisocyanate, dodecamethylene diisocyanate, 1,4-diisocyanatocyclohexane, 1-isocyanato-3,3,5-trimethyl-5-isocyanatomethyl-cyclohexane (isophorone diisocyanate), 2,4'- and/or 4,4'-diisocyanatodicyclohexylmethane, 3-isocyanato-methyl-3,5,5-trimethyl cyclohexyl isocyanate, aromatic polyisocyanates such as 2,4'- and/or 4,4'-diisocyanatodiphenylmethane, 2,4- and/or 2,6-diisocyanatotoluene, naphthylene diisocyanate, and mixtures of these polyisocyanates. Generally, polyisocyanates having three or more isocyanate groups are preferably used; these may be derivatives or adducts of diisocyanates. Useful polyisocyanates may be obtained by reaction of an excess amount of an isocyanate with water, a polyol (for example, ethylene glycol, propylene glycol, 1,3-butylene glycol, neopentyl glycol, 2,2,4-trimethyl-1,3-pentane diol, hexamethylene glycol, cyclohexane dimethanol, hydrogenated bisphenol A, trimethylolpropane, trimethylolethane, 1,2,6-hexanetriol, glycerine, sorbitol or pentaerythritol), or by the reaction of the isocyanate with itself to give an isocyanurate. Examples include biuret-group-containing polyisocyanates, isocyanurate-group-containing polyisocyanates, urethane-group-containing polyisocyanates, carbodiimide group-containing polyisocyanates, allophanate group-containing polyisocyanates, and uretdione group-containing polyisocyanates.

Curing catalysts for the urethane reaction such as tin catalysts can be used in the coating composition. Typical examples are without limitation, tin and bismuth compounds including dibutyltin dilaurate, dibutyltin oxide, and bismuth octoate. When used, catalysts are typically present in amounts of about 0.05 to 2 percent by weight tin based on weight of total non-volatile content.

Preferably, the at least one crosslinking agent present as constituent (B1) is a polyisocyanate having two or more NCO-groups, which is preferably unblocked. In this case, the coating material composition is, of course, a 2K coating material composition.

### Further optional constituents

The coating material composition may contain one or more commonly used additives depending on the desired application. For example, the coating material composition may comprise at least one additive selected from the group consisting of reactive diluents, light stabilizers, antioxidants, deaerators, emulsifiers, slip additives, polymerization inhibitors, plasticizers, initiators for free-radical polymerizations, adhesion promoters, flow control agents, film-forming auxiliaries, sag control agents (SCAs), flame retardants, corrosion inhibitors, siccatives, biocides, thickeners and/or matting agents. They can be used in the known and customary proportions. Preferably, their content, based on the total weight of the coating material composition is 0.01 to 20.0 wt.-%, more preferably 0.05 to 15.0 wt.-%, particularly preferably 0.1 to 10.0 % By weight, most preferably from 0.1 to 7.5% by weight, especially from 0.1 to 5.0% by weight and most preferably from 0.1 to 2.5% by weight.

The preparation of the coating material composition can be carried out using customary and known preparation and mixing methods and mixing units, or using conventional dissolvers and/or stirrers.

### Method

A disclosure is a method of coating a substrate, comprising at least one step of applying to an optionally pre-coated substrate the clearcoat coating material composition, preferably via spray application, to form at least one coating film onto the optionally pre-coated substrate and at least one further step of curing the at least one coating film to obtain at least one cured coating layer onto the substrate.

All preferred embodiments described hereinabove in connection with the coating material composition are also preferred embodiments with regard to the aforementioned method.

Preferably, the method is a method of preparing a multilayer coating system onto an optionally precoated substrate comprising at least steps (1), (2), and (3), namely
(1) applying a basecoat coating material composition to an optionally pre-coated substrate and forming an first coating film on the optionally pre-coated substrate,
(2) applying a second coating material composition to the first coating film present on the substrate obtained after step (1) prior to curing the first coating film and forming a second coating film adjacent to the first coating film, wherein the second coating material composition is the clearcoat coating material composition, and
(3) jointly curing the first and second coating films, the cured second coating film being the outermost layer of the formed multilayer coating system, to obtain cured first and second coating layers.

Preferably, at least step (2), more preferably also step (1) is performed via a spray application.

The first coating film formed on the optionally pre-coated substrate is at this stage an uncured coating film. Thus, both the first and the second coating material compositions are applied wet-on-wet.

The method is particularly suitable for the coating of automotive vehicle bodies or parts thereof including respective metallic substrates, but also plastic substrates such as polymeric substrates. Consequently, the preferred substrates are automotive vehicle bodies or parts thereof.

Suitability as metallic substrates used in accordance with the invention are all substrates used customarily and known to the skilled person. The substrates used in accordance with the invention are preferably metallic substrates, more preferably selected from the group consisting of steel, preferably steel selected from the group consisting of bare steel, cold rolled steel (CRS), hot rolled steel, galvanized steel such as hot dip galvanized steel (HDG), alloy galvanized steel (such as, for example, Galvalume, Galvannealed or Galfan) and aluminized steel, aluminum and magnesium, and also Zn/Mg alloys and Zn/Ni alloys. Particularly suitable substrates are parts of vehicle bodies or complete bodies of automobiles for production.

Preferably, thermoplastic polymers are used as plastic substrates. Suitable polymers are poly(meth)acrylates including polymethyl(meth)acrylates, polybutyl (meth)acrylates, polyethylene terephthalates, polybutylene terephthalates, polyvinylidene fluorides, polyvinyl chlorides, polyesters, including polycarbonates and polyvinyl acetate, polyamides, polyolefins such as polyethylene, polypropylene, polystyrene, and also polybutadiene, polyacrylonitrile, polyacetal, polyacrylonitrile-ethylene-propylene-diene-styrene copolymers (A-EPDM), ASA (acrylonitrile-styrene-acrylic ester copolymers) and ABS (acrylonitrile-butadiene-styrene copolymers), polyetherimides, phenolic resins, urea resins, melamine resins, alkyd resins, epoxy resins, polyurethanes, including TPU, polyetherketones, polyphenylene sulfides, polyethers, polyvinyl alcohols, and mixtures thereof. Polycarbonates and poly(meth)acrylates are especially preferred.

The substrate used in accordance with the invention is preferably a metallic substrate pretreated with at least one metal phosphate such as zinc phosphate. A pretreatment of this kind by means of phosphating, which takes place normally after the substrate has been cleaned and before the substrate is electrodeposition-coated, is in particular a pretreatment step that is customary in the automobile industry.

As outlined above the substrate used may be a pre-coated substrate, i.e. a substrate bearing at least one cured coating film. The substrate used in step (1) can be pre-coated with a cured electrodeposition coating layer. The substrate can, e.g., be provided also with at least one cured primer coating film as at least one additional pre-coat. The term "primer" is known to a person skilled in the art. A primer typically is applied after the substrate has been provided with a cured electrodeposition coating layer. In case a cured primer coating film is also present, the cured electrodeposition coating film is present underneath and preferably adjacent to the cured primer coating film.

Preferably, the method further comprises a step (1a), which is carried out after step (1) and before step (2). In said step (1a) the first coating film obtained after step (1) is flashed-off before applying the second coating material composition in step (2) preferably for a period of 1 to 20 minutes, more preferably for a period of 2 to 15 minutes, in particular for a period of 5 to 10 minutes. Preferably, step (1a) is performed a temperature not exceeding 40°C, more preferably at a temperature in the range of from 18 to 30°C.

The term "flashing off" in the sense of the present invention means a drying, wherein at least some of the solvents and/or water are evaporated from the coating film (i.e. from the coating layer being formed), before the next coating material composition is applied and/or a curing is carried out. No curing is performed by the flashing-off.

Preferably, the method further comprises a step (2a), which is carried out after step (2) and before step (3). In said step (2a) the second coating film obtained after step (2) is flashed-off before performing curing step (3) preferably for a period of 1 to 20 minutes, more preferably for a period of 2 to 15 minutes, in particular for a period of 5 to 10 minutes. Preferably, step (2a) is performed at a temperature not exceeding 40°C, more preferably at a temperature in the range of from 18 to 30°C.

In step (3) of the method the first and second coating films are jointly cured, i.e. are cured together simultaneously. The cured second coating film represents the outermost layer of the formed multilayer coating system obtained after step (3).

Each resulting cured coating film represents a coating layer. Thus, after performing step (3) a first and second coating layer are formed on the optionally pre-coated substrate, with the second layer being the outermost layer of the formed multilayer coating system.

Preferably, step (3) is performed at a temperature less than 110°C, preferably less than 105°C in particular at a temperature in the range of from 15 to 75°C or of from 15 to 65°C, for a period of 5 to 45 minutes, preferably for a period of 20 to 45 minutes, in particular for a period of 25 to 35 minutes.

### Coated substrate

A further disclosure is a coated substrate, which is obtainable by the method.

All preferred embodiments described hereinabove in connection with the coating material composition and the method are also preferred embodiments with regard to the aforementioned coated substrate.

### Inventive use

Subject-matter of the present invention is a use of at least one branched OH-functional polyester (A2) as defined above and as further defined hereinafter as flow enhancer in a clearcoat coating material application for spray applying said clearcoat coating material onto an optionally pre-coated substrate and/or as levelling agent.

Preferably, the at least one branched OH-functional polyester is present in the clearcoat coating material application.

All preferred embodiments described hereinabove in connection with the coating material composition, the method and the coated substrate, are also preferred embodiments with regard to the aforementioned inventive use.

### METHODS

### 1. Non-volatile fraction

The non-volatile fraction (the solids or solids content) is determined in accordance with ASTM D-2369 (date: July 2010). This involves weighing out 0.3 g of sample into an aluminum dish which has been dried beforehand and drying the dish with sample in a drying cabinet at 110°C for 60 minutes, cooling it in a desiccator, and then reweighing. The residue, relative to the total amount of sample employed, corresponds to the non-volatile fraction.

### 2. DOI and appearance

The DOI (distinctiveness of image), the aspect of gloss characterized by the sharpness of images of objects produced by reflection at a surface, is measured according to ASTM E 284-17. Highest and best rating is 10. Appearance is considered as unacceptable when the measured DOI is ≤7 (20° angle) due to the occurrence of die-back.

### EXAMPLES

The following examples further illustrate the invention but are not to be construed as limiting its scope.

### 1. Preparation of an inventively used branched polyester polyol

### Step (a)

A reactor was charged with 12.01 parts by weight trimethylolpropane, 6.30 parts by weight adipic acid, and 1.13 parts by weight mixed xylenes. The contents of the reactor were mixed and heated to 230 °C. By-product water was removed as it was generated, and the temperature was maintained above 200 °C for about 5 hours, then as much of the xylenes was removed as possible and the reaction product (first intermediate product) was cooled to 90 °C.

### Step (b)

To the reactor was then added 8.39 parts by weight of molten hexahydrophthalic anhydride (60 °C) and 4.52 parts by weight ethyl 3-ethoxypropionate. The contents of the reactor were stirred and heated to 115 °C. After the exotherm peaked (keeping the temperature below 150 °C), the contents of the reactor were heated to 136 °C, then cooled again to 90 °C, and an additional 16.78 parts by weight of molten hexahydrophthalic anhydride (60 °C) were added followed by a flush of 1.42 parts by weight ethyl 3-ethoxypropionate. The contents of the reactor were stirred and heated to 115 °C. After the exotherm peaked (keeping the temperature below 150 °C), the contents of the reactor were heated to 145 °C. The temperature was maintained at 145 °C for 90 minutes, then cooled to 140 °C. Thus, the second intermediate was formed.

### Step (c)

Keeping the temperature between 140 and 148 °C, 37.40 parts by weight of Cardura^{™} E10-P was added over about 90 minutes, followed by a flush of 1.42 parts by weight ethyl 3-ethoxypropionate. The reaction mixture was held at 145 °C for 3 hours, then cooled and reduced with 5.32 parts by weight of Aromatic 100 and 5.31 parts by weight of n-butyl acetate. Thus, a hyperbranched polyester polyol (PP) solution (80 wt.-% solids) was obtained.

### 2. Preparation of clearcoat material coating compositions

### 2.1 "A"-component for preparing comparative example C1

An "A"-component for preparing comparative example C1 has been prepared by mixing the constituents listed in Table 2.1 in this order. "pbw" means parts by weight.

**Table 2.1: "A-component" of clear coat composition comparative example C1**

| **Constituent** | **Amount [pbw]** |
|---|---|
| p-chlorobenzotrifluoride (PCBTF) | 15.72 |
| Methyl acetate | 6.81 |
| Solus^{®} 2300 | 1.47 |
| Benzoic acid | 0.16 |
| Surface additive (commercially available) | 0.46 |
| Dibutyl tin dilaurate (DBTL) | 0.05 |
| Castor oil based polyol | 1.53 |
| UV absorber (commercially available) | 0.90 |
| HALS (commercially available) | 0.62 |
| (Meth)acrylic resin dispersion 1 | 43.94 |
| (Meth)acrylic resin dispersion 2 | 17.35 |
| (Meth)acrylic resin dispersion 3 | 6.13 |
| ∑ | 95.14 |

Solus^{®} 2300 is a cellulose based commercial product, which is available from the company Eastman. The castor oil based polyol has an OH-number of 365 mg KOH/g and is commercially available. HALS is a commercially available hindered amine light stabilizer. (Meth)acrylic resin 1 dispersion is an organic solvent dispersion of an OH-functional (meth)acrylic resin having a solids content of about 50 wt.-%, a calculated T_{g} (glass transition temperature) of about 75°C and a calculated hydroxyl equivalent weight of about 400 g solids/equivalent -OH. (Meth)acrylic resin 2 dispersion is an organic solvent dispersion of an OH-functional (meth)acrylic resin having a solids content of about 69 wt.-%, a calculated T_{g} of about 64°C and a calculated hydroxyl equivalent weight of about 449 g solids/equivalent -OH, the dispersion containing p-chlorobenzotrifluoride (PCBTF) with PCBTF being present in the dispersion in an amount of 42 wt.-%, based on the total weight of all solvents present in the dispersion. (Meth)acrylic resin 3 dispersion is an organic solvent dispersion of an OH-functional (meth)acrylic resin having a solids content of about 43 wt.-%, a calculated T_{g} of about 74°C and a calculated hydroxyl equivalent weight of about 645 g solids/equivalent -OH.

### 2.2 "A"-component for preparing inventive example I1

An "A"-component for preparing inventive example I1 has been prepared by mixing the constituents listed in Table 2.1 in this order. Afterwards, 4.86 parts by weight of the branched polyester polyol solution described in item **1.** have been additionally added.

### 2.3 Clearcoat coating material composition C1 (comparative)

The "A"-component as described above in item 2.1 has been mixed with a polyisocyanate hardener as "B"-component using a mixing ratio of 2:1 ("A":"B") by volume. A dispersion of an HDI-based polyisocyanate hardener (solids content of 54-56 wt.-%) has been used as hardener "B" component. Accordingly, 95.14 parts by weight of the "A"-component have been mixed with 51.13 parts by weight of the "B"-component. Afterwards, the resulting composition has been diluted with up to 20 vol.-% by making use of a reducer component containing one or more organic solvents to sprayable viscosity (14 to 18 mPa·s in a Ford #4 cup). The resulting comparative example C1 had a total solids content of 34 to 38 wt.-%.

### 2.4 Clearcoat coating material composition I1

The "A"-component as described above in item **2.2** has been mixed with a polyisocyanate hardener as "B"-component using a mixing ratio of 2:1 ("A":"B") by volume. A dispersion of an HDI-based polyisocyanate hardener (solids content of 54-56 wt.-%) has been used as hardener "B" component. Accordingly, 100 parts by weight of the "A"-component have been mixed with 53.93 parts by weight of the "B"-component. Afterwards, the resulting composition has been diluted with up to 20 vol.-% by making use of a reducer component containing one or more organic solvents to sprayable viscosity (14 to 18 mPa·s in a Ford #4 cup). The resulting inventive example I1 had a total solids content of 34 to 38 wt.-%. The amount of polyester (A2) present in the result coating material composition is 5.19 wt.-%, based on the total solids content of the composition.

### 2.5 "A"-component for preparing comparative example C2

An "A"-component for preparing comparative example C2 has been prepared by mixing the constituents listed in Table 2.2 in this order. "pbw" means parts by weight.

**Table 2.2: "A-component" of clearcoat composition comparative example C2**

| **Constituent** | **Amount [pbw]** |
|---|---|
| Solution containing Solus^{®} 2300 | 12.25 |
| p-chlorobenzotrifluoride (PCBTF) | 21.36 |
| (Meth)acrylic resin dispersion 1 | 35.30 |
| (Meth)acrylic resin dispersion 3 | 4.46 |
| Methyl acetate | 1.31 |
| UV absorber (commercially available) | 0.76 |
| HALS (commercially available) | 0.51 |
| p-chlorobenzotrifluoride (PCBTF) | 0.42 |
| Dibutyl tin dilaurate (DBTL) | 0.04 |
| Surface additive (commercially available) | 0.36 |
| Wetting additive (commercially available) | 0.10 |
| (Meth)acrylic resin dispersion 2 | 12.03 |
| Acetone | 2.04 |
| Methyl acetate | 1.99 |
| Benzoic acid | 0.16 |
| Triisodecyl phosphite (TDP) | 0.20 |
| Trisnonylphenyl phosphite (TNPP) | 0.20 |
| Acetone | 0.30 |
| Acetone | 0.20 |
| ∑ | 93.99 |

Solus^{®} 2300 is a cellulose based commercial product, which is available from the company Eastman. The solution containing Solus^{®} 2300 that has been used as one constituent has been prepared prior to its use by adding 12.52 parts by weight of methyl acetate and 18.79 parts by weight of acetone to 47.10 parts by weight PCBTF, mixing these solvents with each other by agitation, adding 18.59 parts by weight of Solus^{®} 2300 under stirring, thereby making sure that the temperature of the mixture does not exceed 125°F (51.67°C) and adding 3.00 parts by weight of PCBTF. The mixture can be used once all constituents present therein have been completely dissolved. (Meth)acrylic resin 1 dispersion, (meth)acrylic resin dispersion 2 and (meth)acrylic resin 3 dispersion are the dispersions that have also been used for the preparation of the "A"-components for preparing C1 and I1.

### 2.6 "A"-component for preparing inventive example 12

An "A"-component for preparing inventive example I2 has been prepared by mixing the constituents listed in Table 2.3 in this order. "pbw" means parts by weight.

**Table 2.3: "A-component" of clearcoat composition inventive example I2**

| **Constituent** | **Amount [pbw]** |
|---|---|
| Solution containing Solus^{®} 2300 | 12.25 |
| p-chlorobenzotrifluoride (PCBTF) | 21.36 |
| (Meth)acrylic resin dispersion 1 | 35.30 |
| (Meth)acrylic resin dispersion 3 | 4.46 |
| Methyl acetate | 1.31 |
| UV absorber (commercially available) | 0.76 |
| HALS (commercially available) | 0.51 |
| p-chlorobenzotrifluoride (PCBTF) | 0.42 |
| Dibutyl tin dilaurate (DBTL) | 0.04 |
| Surface additive (commercially available) | 0.36 |
| Wetting additive (commercially available) | 0.10 |
| (Meth)acrylic resin dispersion 2 | 12.03 |
| Branched polyester polyol solution | 6.01 |
| Acetone | 2.04 |
| Methyl acetate | 1.99 |
| Benzoic acid | 0.16 |
| Triisodecyl phosphite (TDP) | 0.20 |
| Trisnonylphenyl phosphite (TNPP) | 0.20 |
| Acetone | 0.30 |
| Acetone | 0.20 |
| ∑ | 100.00 |

The "A"-component for preparing inventive example I2 corresponding to Table 2.3 corresponds to the "A"-component for preparing comparative example C2 corresponding to Table 2.2 with the exception that it additionally contains an hyperbranched polyester (6.01 parts by weight). The branched polyester polyol solution is the one described in item **1.**

### 2.7 Clearcoat coating material composition C2 (comparative)

The "A"-component as described above in item **2.5** has been mixed with a polyisocyanate hardener as "B"-component using a mixing ratio of 4:1 ("A":"B") by volume. A dispersion of an HDI-based polyisocyanate hardener (solids content of 54-56 wt.-%) has been used as hardener "B" component. Accordingly, 93.99 parts by weight of the "A"-component have been mixed with 25.27 parts by weight of the "B"-component. Afterwards, the resulting composition has been diluted with up to 15 vol.-% by making use of a reducer component containing one or more organic solvents to sprayable viscosity (14 to 18 mPa·s in a Ford #4 cup). The resulting comparative example C2 had a total solids content of 34 to 38 wt.-%.

### 2.8 Clearcoat coating material composition I2

The "A"-component as described above in item **2.6** has been mixed with a polyisocyanate hardener as "B"-component using a mixing ratio of 4:1 ("A":"B") by volume. A dispersion of an HDI-based polyisocyanate hardener (solids content of 54-56 wt.-%) has been used as hardener "B" component. Accordingly, 100 parts by weight of the "A"-component have been mixed with 27.01 parts by weight of the "B"-component. Afterwards, the resulting composition has been diluted with up to 15 vol.-% by making use of a reducer component containing one or more organic solvents to sprayable viscosity (14 to 18 mPa·s in a Ford #4 cup). The resulting inventive example I2 had a solids content of 34 to 38 wt.-%. The amount of polyester (A2) present in the result coating material composition is 9.28 wt.-%, based on the total solids content of the composition.

### 3. Preparation of multilayer coating systems

### 3.1 Multilayer coating system MCC1 obtained by making use of clearcoat coating material composition C1

A 12X16 inch steel panel bearing a cured primer coat was used as substrate and a commercially available solventborne, but water-reducible basecoat material (90-line waterborne metallic basecoat available from BASF) was spray-applied via spraymation^{®} machine onto the primer coat. After a flash-off at room temperature (23°C) for up to 10 minutes the comparative clearcoat coating material composition C1 was spray-applied wet-on-wet onto the uncured basecoat film directly after its preparation as described above in item **2.3.** The coating method including the wet-on-wet-application of basecoat and clearcoat was performed at >90°F (>32.2°C) and >90% relative humidity (RH) for imitating comparably humid conditions. Then, both coating films applied were jointly cured for 30 minutes at 60°C and a substrate coated with multilayer coating system MCC1 was obtained.

### 3.2 Multilayer coating system MCI1 obtained by making use of clearcoat coating material composition I1

A substrate coated with a multilayer coating system MCI1 was obtained in the same manner as described above in item **3.1** for MCC1 with the exception that instead of the comparative clearcoat coating material composition C1 clearcoat coating material composition I1 directly after its preparation as described above in item **2.4** was used.

### 3.3 Multilayer coating system MCC2 obtained by making use of clearcoat coating material composition C2

A substrate coated with a multilayer coating system MCC2 was obtained in the same manner as described above in item **3.1** for MCC1 with the exception that instead of the comparative clearcoat coating material composition C1 comparative clearcoat coating material composition C2 directly after its preparation as described above in item **2.7** was used.

### 3.4 Multilayer coating system MC12 obtained by making use of clearcoat coating material composition C2

A substrate coated with a multilayer coating system MCI2 was obtained in the same manner as described above in item 3.1 for MCC1 with the exception that instead of the comparative clearcoat coating material composition C1 clearcoat coating material composition 12 directly after its preparation as described above in item 2.8 was used.

### 4. Properties of the substrates coated with the multilayer coating systems

Each substrate coated with one of multilayer coating systems MCC1, MCC2, MCI1 and MCI2 was rated for appearance (die-back) after cool-down (directly after application) and on the next day after 24 hours.

### Die-back and DOI

Die-back and also a pinching were observed in case of multilayer coating systems MCC1 and MCC2, whereas no die-back and no pinching was observed for MCI1 and MCI2.

The DOI of MCC1 and MCC2 was <7 each, whereas the DOI measured for MCI1 and MCI2 was 8 to 9 in both cases.

These data show that an incorporation of an inventively used polyester in additive amounts into a clearcoat coating material composition leads to an improved appearance in terms that no die-back and no pinches are observed, even at hot and humid conditions. These data also show that the inventively used polyester can be advantageously used as flow and levelling agent in clearcoat coating material compositions.

## Claims

1. A use of at least one branched OH-functional polyester as constituent (A2), which is obtainable by performing steps (a), (b) and (c), namely by
(a) reacting at least one polyol comprising at least three OH-groups with at least one aliphatic dicarboxylic acid having from 6 to 36 carbon atoms and/or an anhydride and/or ester thereof to form a OH-functional first intermediate product;
(b) reacting the first intermediate product obtained from step (a) with at least one cyclic carboxylic acid anhydride to form a carboxylic acid-functional second intermediate product; and
(c) reacting the second intermediate product obtained from step (b) with at least one epoxide-functional compound having one epoxide group to form the branched OH-functional polyester,
as flow enhancer in a clearcoat coating material application for spray applying said clearcoat coating material onto an optionally pre-coated substrate and/or as levelling agent.

2. The use according to claim 1, **characterized in that** in step (a) for preparing the at least one branched OH-functional polyester as constituent (A2) the ratio of moles of the polyol to moles of the dicarboxylic acid and/or an anhydride and/or ester thereof is from 2.0 to 2.2 mole of the polyol per mole of the dicarboxylic acid and/or an anhydride and/or ester thereof.

3. The use according to claim 1 or 2, **characterized in that** in step (b) for preparing the at least one branched OH-functional polyester as constituent (A2) the equivalent ratio of hydroxyl groups of the first intermediate product to anhydride groups of the cyclic carboxylic acid anhydride is from 1.0 to 1.25 equivalents of hydroxyl groups per carboxylic anhydride groups.

4. The use according to any one of the preceding claims, **characterized in that** in step (c) for preparing the at least one branched OH-functional polyester as constituent (A2) the equivalent ratio of carboxylic acid groups of the second intermediate product to epoxide groups of the epoxide-functional compound is from 1.0 to 2.5 equivalents of carboxylic acid groups per equivalents epoxide groups.

5. The use according to any one of the preceding claims, **characterized in that** the at least one branched OH-functional polyester (A2) is present in the clearcoat coating material composition in an amount in the range of from 1.0 wt.-% to 15.0 wt.-%, based on the total solids content of the coating material composition, the clearcoat coating material further comprising
(A1) at least one OH-functional (meth)acrylic copolymer as constituent (A1), and
(B1) at least one crosslinking agent as constituent (B1), which is different from both constituents (A1) and (A2) and which contains crosslinkable functional groups, which can be at least crosslinked with OH-functional groups.

## Patentansprüche

1. Verwendung mindestens eines verzweigten OH-funktionellen Polyesters als Bestandteil (A2), der durch Durchführung der Schritte (a), (b) und (c) erhältlich ist, nämlich durch
(a) Umsetzen von mindestens einem Polyol mit mindestens 3 OH-Gruppen mit mindestens einer aliphatischen Dicarbonsäure mit 6 bis 36 Kohlenstoffatomen und/oder einem Anhydrid und/oder Ester davon unter Bildung eines OH-funktionellen ersten Zwischenprodukts;
(b) Umsetzen des aus Schritt (a) erhaltenen ersten Zwischenprodukts mit mindestens einem cyclischen Carbonsäureanhydrid unter Bildung eines carbonsäurefunktionellen zweiten Zwischenprodukts; und
(c) Umsetzen des aus Schritt (b) erhaltenen zweiten Zwischenprodukts mit mindestens einer epoxidfunktionellen Verbindung mit einer Epoxidgruppe unter Bildung des verzweigten OH-funktionellen Polyesters,
als Fließverbesserer bei einer Klarlackbeschichtungsmittelapplikation für die Spritzapplikation des Klarlackbeschichtungsmittels auf einem gegebenenfalls vorbeschichteten Substrat und/oder als Verlaufsmittel.

2. Verwendung nach Anspruch 1, **dadurch gekennzeichnet, dass** in Schritt (a) zur Herstellung des mindestens einen verzweigten OH-funktionellen Polyesters als Bestandteil (A2) das Verhältnis von Molen des Polyols zu Molen der Dicarbonsäure und/oder eines Anhydrids und/oder Esters davon 2,0 bis 2,2 mol des Polyols pro Mol der Dicarbonsäure und/oder eines Anhydrids und/oder Esters davon beträgt.

3. Verwendung nach Anspruch 1 oder 2, **dadurch gekennzeichnet, dass** in Schritt (b) zur Herstellung des mindestens einen verzweigten OH-funktionellen Polyesters als Bestandteil (A2) das Äquivalentverhältnis von Hydroxylgruppen des ersten Zwischenprodukts zu Anhydridgruppen des cyclischen Carbonsäureanhydrids 1,0 bis 1,25 Äquivalente Hydroxylgruppen pro Carbonsäureanhydridgruppen beträgt.

4. Verwendung nach einem der vorhergehenden Ansprüche, **dadurch gekennzeichnet, dass** in Schritt (c) zur Herstellung des mindestens einen verzweigten OH-funktionellen Polyesters als Bestandteil (A2) das Äquivalentverhältnis von Carbonsäuregruppen des zweiten Zwischenprodukts zu Epoxidgruppen der epoxidfunktionellen Verbindung 1,0 bis 2,5 Äquivalente Carbonsäuregruppen pro Äquivalente Epoxidgruppen beträgt.

5. Verwendung nach einem der vorhergehenden Ansprüche, **dadurch gekennzeichnet, dass** der mindestens eine verzweigte OH-funktionelle Polyester (A2) in der Klarlackbeschichtungsmittelzusammensetzung in einer Menge im Bereich von 1,0 Gew.-% bis 15,0 Gew.-%, bezogen auf den Gesamtfeststoffgehalt der Beschichtungsmittelzusammensetzung, vorliegt, wobei das Klarlackbeschichtungsmittel ferner (A1) mindestens ein OH-funktionelles (Meth)acryl-Copolymer als Bestandteil (A1) und (B1) mindestens ein Vernetzungsmittel als Bestandteil (B1), das von den beiden Bestandteilen (A1) und (A2) verschieden ist und vernetzbare funktionelle Gruppen, die zumindest mit OH-funktionellen Gruppen vernetzt werden können, enthält, umfasst.

## Revendications

1. Utilisation d'au moins un polyester à fonction OH ramifié en tant que constituant (A2), qui peut être obtenu par la mise en œuvre des étapes (a), (b) et (c), à savoir par
(a) la réaction d'au moins un polyol comprenant au moins trois groupes OH avec au moins un acide dicarboxylique aliphatique ayant de 6 à 36 atomes de carbone et/ou un anhydride et/ou ester de celui-ci pour former un premier produit intermédiaire à fonction OH ;
(b) la réaction du premier produit intermédiaire obtenu à partir de l'étape (a) avec au moins un anhydride d'acide carboxylique cyclique pour former un second produit intermédiaire à fonction acide carboxylique ; et
(c) la réaction du second produit intermédiaire obtenu à partir de l'étape (b) avec au moins un composé à fonction époxyde ayant un groupe époxyde pour former le polyester à fonction OH ramifié, et
en tant qu'agent améliorant l'écoulement dans une application de matériau de revêtement transparent pour l'application par pulvérisation dudit matériau de revêtement transparent sur un substrat éventuellement pré-revêtu et/ou en tant qu'agent nivelant.

2. Utilisation selon la revendication 1, **caractérisée en ce que** dans l'étape (a) pour la préparation de l'au moins un polyester à fonction OH ramifié en tant que constituant (A2) le rapport des moles du polyol aux moles de l'acide dicarboxylique et/ou de l'anhydride et/ou ester de celui-ci va de 2,0 à 2,2 moles du polyol par mole de l'acide dicarboxylique et/ou de l'anhydride et/ou ester de celui-ci.

3. Utilisation selon la revendication 1 ou 2, **caractérisée en ce que** dans l'étape (b) pour la préparation de l'au moins un polyester à fonction OH ramifié en tant que constituant (A2) le rapport des équivalents de groupes hydroxyle du premier produit intermédiaire aux groupes anhydride de l'anhydride d'acide carboxylique cyclique va de 1,0 à 1,25 équivalents de groupes hydroxyle par groupes anhydride carboxylique.

4. Utilisation selon l'une quelconque des revendications précédentes, **caractérisée en ce que** dans l'étape (c) pour la préparation de l'au moins un polyester à fonction OH ramifié en tant que constituant (A2) le rapport des équivalents de groupes acide carboxylique du second produit intermédiaire aux groupes époxyde du composé à fonction époxyde va de 1,0 à 2,5 équivalents de groupes acide carboxylique par équivalent de groupes époxyde.

5. Utilisation selon l'une quelconque des revendications précédentes, **caractérisée en ce que** l'au moins un polyester à fonction OH ramifié (A2) est présent dans la composition de matériau de revêtement transparent en une quantité dans la plage allant de 1,0 % en poids à 15,0 % en poids, sur la base de la teneur en matières solides totales de la composition de matériau de revêtement, le matériau de revêtement transparent comprenant en outre (A1) au moins un copolymère (méth)acrylique à fonction OH en tant que constituant (A1), et (B1) au moins un agent de réticulation en tant que constituant (B1), qui est différent des deux constituants (A1) et (A2) et qui contient des groupes fonctionnels réticulables, qui peuvent être au moins réticulés avec des groupes fonctionnels OH.
